# EUROPEAN PATENT SPECIFICATION

(11) **EP 1 493 290 B1**
(45) Date of publication and mention of the grant of the patent: **12.11.2008**
(21) Application number: 02807238.7
(22) Date of filing: 23.08.2002
(51) Int. Cl.: H04Q 7/32, H04L 12/56

(54) **SYSTEM AND METHOD FOR WIRELESS DATA TERMINAL MANAGEMENT USING GENERAL PACKET RADIO SERVICE NETWORK**
SYSTEM UND VERFAHREN ZUR DRAHTLOS-DATENENDGERÄT VERWALTUNG MIT EINEM ALLGEMEINEN PAKETFUNKDIENSTNETZWERK
SYSTEME ET PROCEDE DE GESTION DE TERMINAL DE DONNEES SANS FIL VIA UN RESEAU DE SERVICE RADIO GENERAL A COMMUTATION PAR PAQUETS

(30) Priority: 11.04.2002 US 119949
(43) Date of publication of application: 05.01.2005
(73) Proprietor: Mformation Technologies Inc., Edison, NJ 08830 (US)
(72) Inventor: KUSHWAHA, Rakesh, Marlboro, NJ 07746 (US); NATH, Badri, Edison, NJ 08820 (US)
(74) Representative: Wihlsson, Joakim Per Magnus
(86) International application number: PCT/US2002/026699
(87) International publication number: WO 2003/088699

(56) References cited:
- EP-A- 0 757 502
- EP-A- 1 170 969
- WO-A-01/86985
- DE-A- 19 801 576
- US-A- 5 046 082

## Description

### Cross-Reference to Related Applications

This application is a continuation-in-part of U.S. Application No. 09/925,536, filed August 10, 2001, which claims the benefit of provisional application 60/251,034, filed December 5, 2000.

### Field of the Invention

The present invention relates to a system and method for providing remote over the air management (OTM) of wireless data terminals over an Internet Protocol (IP) transport mechanism used in a General Packet Radio Service (GPRS) network. Management includes over the air, locking/unlocking the terminal; zapping/deleting contents from the terminal; terminal password management; managing and monitoring device resources; data application distribution and application configuration on the wireless terminal.

### Background of the Invention

Currently, there are various implemented and proposed protocols to manage, control, and reconfigure computer systems remotely over a network via a central console. Such protocols are designed for an environment in which the computer systems to be managed are connected to the central console by fixed wiring, such as twisted pair wire, coaxial cable, or fiber optic cable. Management and control methods for networks that utilize fixed wiring assume that the network is quite reliable. In addition, many protocols are designed for a controlled network environment, such as a local area network, in which the computing environment is secure. Such security may be provided by use of a firewall to connect the local area network to other networks.

However, networks utilizing fixed wiring are limited in that in mobile devices cannot be configured onto a fixed network and so cannot be utilized. In addition, in many situations, the installation of the fixed wiring may be expensive or infeasible. Wireless networks provide these capabilities that fixed networks lack. Thus, a need arises for a technique that will allow data terminals to be remotely managed, controlled, and reconfigured using a wireless network. Network considerations in a wireless network are different that those in a fixed network. For example, wireless connections are not as reliable as fixed connections, due to interference and other reception difficulties. In addition, security considerations in a wireless network are different, in that wireless signals carrying data are much more subject to interception than are signals carrying data in a fixed network.

Signaling networks in wireless telecommunications have been used for device activation/provisioning, voice call set up/tear down and providing messaging service such as Short Message Service (SMS) and instant messaging service. However, a need arises for a technique that provides the capability for more advanced management of wireless devices, as well as the capability to control and reconfigure wireless devices remotely over a wireless network with acceptable reliability and security.

DE 198 01 576 A1 describes a method for providing to a mobile device dynamic menu presentations for new value added services that may be added by the service provides. EP 1 170 969 A1 discloses a method for remotely controlling a mobile device by sending a control message including a security code and a lock command to the mobile device. Furthermore, EP 0 757 502 A2 describes over-the-air locking of a UIM in a mobile device by a UIM-lock-command sent by an MSC; the command is executed after verification of its authenticy.

### Summary of the Invention

The present invention is an apparatus that provides the capability to manage, control, and reconfigure wireless devices remotely over a wireless network with acceptable reliability and security. In one embodiment, the present invention is an apparatus according to the features of claim 1.

The apparatus is operable to perform steps of a corresponding method.

In one aspect, the packet radio channel of the telecommunications network comprises a General Packet Radio Service channel. The transmitting step may comprise the step of transmitting the command to a management agent process executing on the wireless device. The transmitting step may comprise the step of transmitting the command to a management agent process executing on the wireless device in a Short Message Service message.

In one aspect, the transmitting step comprises the step of transmitting the command to a management agent process executing on the wireless device. The connection may be established periodically or the connection may be established based on a threshold condition.

In one aspect, the command comprises one of: enabling/disabling access of the wireless device to the server, enabling/disabling applications that may run on the wireless device, erasing all or part of contents of the wireless device, transmitting new programs and data to the wireless device, querying a current state of the wireless device, monitoring a level of a battery in the wireless device, monitoring a location of the wireless device in the wireless network, and reconfiguring applications that may run on the wireless device.

In one aspect, the method further comprises the step of transmitting information relating to execution of the command at the wireless device from the wireless device to the server. The information relating to execution of the command may be transmitted periodically or the information relating to execution of the command may be transmitted based on a threshold condition of the wireless device.

In one aspect, the transmitting step comprises the steps of transmitting registration information relating to the wireless device from the wireless device to the server, verifying the registration information at the server, establishing a DCB for the wireless device at the server, placing a command for the wireless device in the DCB, delivering the command from the DCB to the wireless device, and executing the command at the wireless device.

In one aspect, the delivering step comprises the steps of: establishing a connection between the wireless device and the server, transmitting a request for contents of the DCB from the wireless device to the server, and transmitting the contents of the DCB from the server to the wireless device. The connection may be established periodically or the connection may be established based on a threshold condition.

In one aspect, the delivering step comprises the steps of: establishing a connection between the wireless device and the server, transmitting the contents of the DCB from the server to the wireless device without a request from the wireless device, and accepting the contents of the DCB at the wireless device. The connection may be established periodically or the connection may be established based on a threshold condition.

In one aspect, the command comprises one of: enabling/disabling access of the wireless device to the server, enabling/disabling applications that may run on the wireless device, erasing all or part of contents of the wireless device, transmitting new programs and data to the wireless device, querying a current state of the wireless device, monitoring a level of a battery in the wireless device, and monitoring the location of the wireless device in the wireless network.

In one aspect, the method further comprises the step of transmitting information relating to execution of the command at the wireless device from the wireless device to the server. The information relating to execution of the command may be transmitted periodically or the information relating to execution of the command may be transmitted based on a threshold condition of the wireless device.

In another embodiment, a method for remotely managing a wireless device over a wireless network comprises the steps of: receiving registration information from the wireless device, verifying the received registration information, placing a command for the wireless device in a Device Control Box (DCB), and delivering the command to the wireless device.

In one aspect, the delivering step comprises the steps of: establishing a connection with the wireless device, receiving a request for contents of the DCB from the wireless device, and transmitting the contents of the DCB to the wireless device. The connection may be established periodically or the connection may be established based on a threshold condition.

In one aspect, the delivering step comprises the steps of establishing a connection with the wireless device and transmitting the contents of the DCB to the wireless device without a request from the wireless device. The connection may be established periodically or the connection may be established based on a threshold condition.

In one aspect, the command execution comprises the step of: verifying the signature of the command with the signature of the device and only then executing the received command. The signature may comprise one or more of the following: encrypted keys, physical identity of the device, logical identity of the device, a mapping between the logical identity and physical identity of the device, a mapping between device ownership and the origin of the command or explicit authentication.

In one aspect, the method further comprises the step of receiving information relating to execution of the command at the wireless device from the wireless device.

### Brief Description of the Drawings

The details of the present invention, both as to its structure and operation, can best be understood by referring to the accompanying drawings, in which like reference numbers and designations refer to like elements.
Fig. 1 is an exemplary block diagram of a network system in which the present invention may be implemented.
Fig. 2a is an exemplary block diagram of a wireless network system 200 incorporating the remote management technique of the present invention.
Fig. 2b is an exemplary block diagram of the use of a signaling channel shown in Fig. 2a in implementing the present invention.
Fig. 3 is an exemplary block diagram of management server shown in Fig. 1.
Fig. 4 is an exemplary flow diagram of a process for remotely managing devices over a wireless network, according to the present invention.
Fig. 5 is a data flow diagram of the operation of the process shown in Fig. 4.

### Detailed Description of the Invention

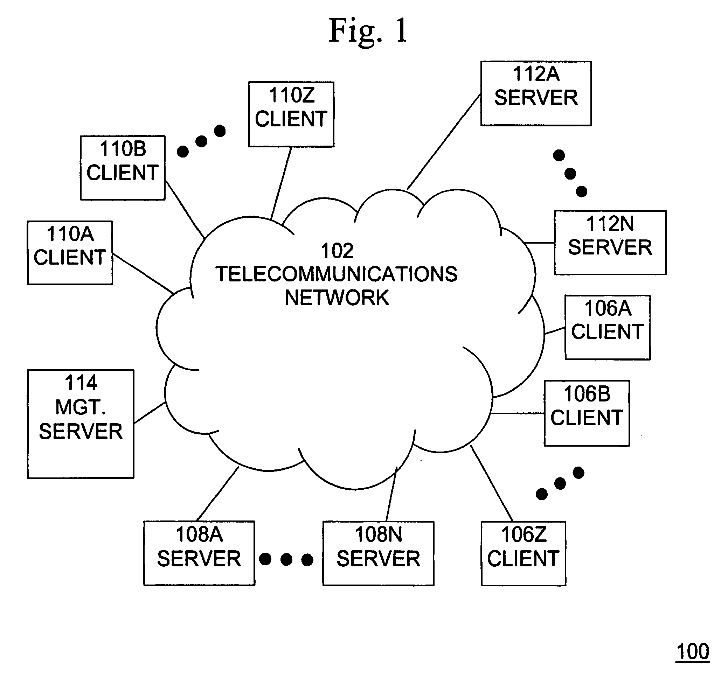

An exemplary block diagram of a network system 100 in which the present invention may be implemented is shown in Fig. 1. Network system 100 includes telecommunications network 102. Telecommunications network 102 provides communicative interconnection of a plurality of devices, such as client systems 106A - 106Z and 110A 110Z and servers 108A - 108N and 112A - 112N. Telecommunications network 102 may include one or more wireless networks and/or one or more wireline networks. The transmission media in a wireless network is typically electromagnetic radiation, such as radio waves or light, while the transmission media in a wireline network is wire, such as copper wire, or the equivalent of wire, such as fiber optic cable. The wireless telecommunications networks included in telecommunications network 102 may include, for example, digital cellular telephone networks, such as Global System for Mobile Telecommunications (GSM) networks, Personal Communication System (PCS) networks, etc. The wireline telecommunications networks included in telecommunications network 102 may include, for example, the Public Switched Telephone Network (PSTN), as well as proprietary local and long distance telecommunications networks. In addition, telecommunications network 102 may include digital data networks, such as one or more local area networks (LANs), one or more wide area networks (WANs), or both LANs and WANs. One or more networks may be included in telecommunications network 102 and may include both public networks, such as the Internet, and private networks and may utilize any networking technology and protocol, such as Ethernet, Token Ring, Transmission Control Protocol/Internet Protocol (TCP/IP), etc.

Client systems 106A - 106Z and 110A - 110Z may include any type of electronic data processing system or communication device. Examples of such electronic data processing system include personal computer systems, such as desktop or laptop computers, workstation computer systems, server computer systems, networks of computer systems, personal digital assistants (PDAs), wireless communications devices, such as cellular telephones, etc. In an embodiment in which the client systems are computer systems, the computer systems may connect directly to network 102, or the computer systems may connect indirectly to network 102 through one or more other networks, gateways, firewalls, etc. Likewise, the connection to network 102 may be wired, wireless, or a combination of wired and wireless. In an embodiment in which the client systems are other types of devices, such as PDAs or telephone devices, the connection to network 102 may be direct or indirect, wired, wireless, or a combination of wired and wireless, as is appropriate. Typically, the user interface of client systems 106A - 106Z and 110A - 110Z is a graphical user interface, but other interfaces may be used as well. For example, the client systems may include conventional landline telephones or cellular telephones communicatively connected to a touch-tone response unit or a voice response unit, which accepts touch-tone or voice commands and transmits them over network 102 and which receives responses over network 102, converts the received responses to audio, and transmits the received responses to the client systems.

Management server 114 is also communicatively connected to network 102. Management server 114 interfaces with telecommunications network 102 and with multiple servers and clients that are connected to telecommunications network 102 and provides remote management of those servers and clients over telecommunications network 102.

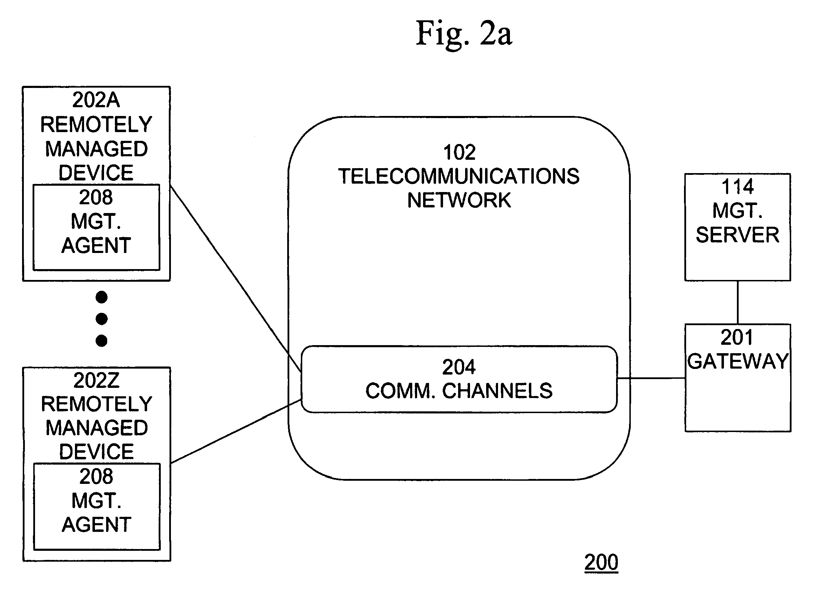

An exemplary block diagram of a wireless network system 200 incorporating the remote management technique of the present invention is shown in Fig. 2a. System 200 includes telecommunications network 102, management server 114, gateway 201, and a plurality of remotely managed devices 202A - 202Z. Telecommunications network 102 may include one or more communications channels 204. Communications channels 204 may carry a variety of communications traffic, such as telephone voice and data calls, packet-based data traffic, and signaling data relating to the telecommunications traffic and the configuration of telecommunications network 102. For example, communications channels 204 may include the well-known General Packet Radio Service (GPRS).

Remotely managed devices 202A - 202Z may include both client and server systems shown in Fig. 1. Each remotely manage device includes a management agent 208, which is typically a software process that provides the capability for management server 114 to remotely manage the device. Management server 114 communicates with the each remotely managed device using communications channels 204 of telecommunications network 102. Management server 114 is communicatively connected to signaling channel 204 via gateway 201. The information that is communicated is directed to or originated from the management agent that is running on the device. Management server 114 typically transmits commands to each remotely managed device. These commands are directed to the management agent running on the device and are then carried out on the device under the control of the management agent. Typical commands that may be transmitted from management server 114 are enabling/disabling access of the remotely managed device to the server, enabling/disabling applications that may run on the remotely managed device, erasing all or part of the device contents, such as programs and data, transmitting new programs and data to a device, querying the current state of the device, etc. Some commands cause the remotely managed device to transmit data to management server 114. In this situation, the management agent on the device originates a transmission of the data to management server 114 over telecommunications network 102.

General Packet Radio Service (GPRS) is the high-speed data evolution of GSM. GPRS supports Internet Protocol (IP), enabling access to Internet and intranet content and applications from GPRS wireless devices. The anticipated data rate for GPRS is 115 Kbps and throughput rates of 30-60 Kbps have been achieved initially. The General Packet Radio Service (GPRS) is a new nonvoice value added service that allows information to be sent and received across a mobile telephone network. It supplements today's Circuit Switched Data and Short Message Service.

Theoretical maximum speeds of up to 171.2 kilobits per second (kbps) are achievable with GPRS using all eight timeslots at the same time. This is about three times as fast as the data transmission speeds possible over current fixed telecommunications networks and ten times as fast as current Circuit Switched Data services on GSM networks. By allowing information to be transmitted more quickly, immediately and efficiently across the mobile network, GPRS may well be a relatively less costly mobile data service compared to SMS and Circuit Switched Data.

GPRS facilitates instant connections whereby information can be sent or received immediately as the need arises, subject to radio coverage. No dial-up modem connection is necessary. This is why GPRS users are sometimes referred to be as being "always connected". Immediacy is one of the advantages of GPRS (and SMS) when compared to Circuit Switched Data. High immediacy is a very important feature for time critical applications such as remote credit card authorization where it would be unacceptable to keep the customer waiting for even thirty extra seconds.

GPRS facilitates several new applications that have not previously been available over GSM networks due to the limitations in speed of Circuit Switched Data (9.6 kbps) and message length of the Short Message Service (160 characters). GPRS will fully enable the Internet applications you are used to on your desktop from web browsing to chat over the mobile network. Other new applications for GPRS, profiled later, include file transfer and home automation- the ability to remotely access and control in-house appliances and machines.

GPRS involves overlaying a packet based air interface on the existing circuit switched GSM network. This gives the user an option to use a packet-based data service. To supplement a circuit switched network architecture with packet switching is quite a major upgrade. However, as we shall see later, the GPRS standard is delivered in a very elegant manner- with network operators needing only to add a couple of new infrastructure nodes and making a software upgrade to some existing network elements.

With GPRS, the information is split into separate but related "packets" before being transmitted and reassembled at the receiving end. Packet switching is similar to a jigsaw puzzle- the image that the puzzle represents is divided into pieces at the manufacturing factory and put into a plastic bag. During transportation of the now boxed jigsaw from the factory to the end user, the pieces get jumbled up. When the recipient empties the bag with all the pieces, they are reassembled to form the original image. All the pieces are all related and fit together, but the way they are transported and assembled varies. The Internet itself is another example of a packet data network, the most famous of many such network types.

Packet switching means that GPRS radio resources are used only when users are actually sending or receiving data. Rather than dedicating a radio channel to a mobile data user for a fixed period of time, the available radio resource can be concurrently shared between several users. This efficient use of scarce radio resources means that large numbers of GPRS users can potentially share the same bandwidth and be served from a single cell. The actual number of users supported depends on the application being used and how much data is being transferred. Because of the spectrum efficiency of GPRS, there is less need to build in idle capacity that is only used in peak hours. GPRS therefore lets network operators maximize the use of their network resources in a dynamic and flexible way, along with user access to resources and revenues.

GPRS should improve the peak time capacity of a GSM network since it simultaneously allocates scarce radio resources more efficiently by supporting virtual connectivity and migrates traffic that was previously sent using Circuit Switched Data to GPRS instead, and reduces SMS Center and signaling channel loading by migrating some traffic that previously was sent using SMS to GPRS instead using the GPRS/ SMS interconnect that is supported by the GPRS standards.

GPRS fully enables Mobile Internet functionality by allowing interworking between the existing Internet and the new GPRS network. Any service that is used over the fixed Internet today- File Transfer Protocol (FTP), web browsing, chat, email, telnet- will be as available over the mobile network because of GPRS. In fact, many network operators are considering the opportunity to use GPRS to help become wireless Internet Service Providers in their own right.

Because it uses the same protocols, the GPRS network can be viewed as a sub-network of the Internet with GPRS capable mobile phones being viewed as mobile hosts. This means that each GPRS terminal can potentially have its own IP address and will be addressable as such.

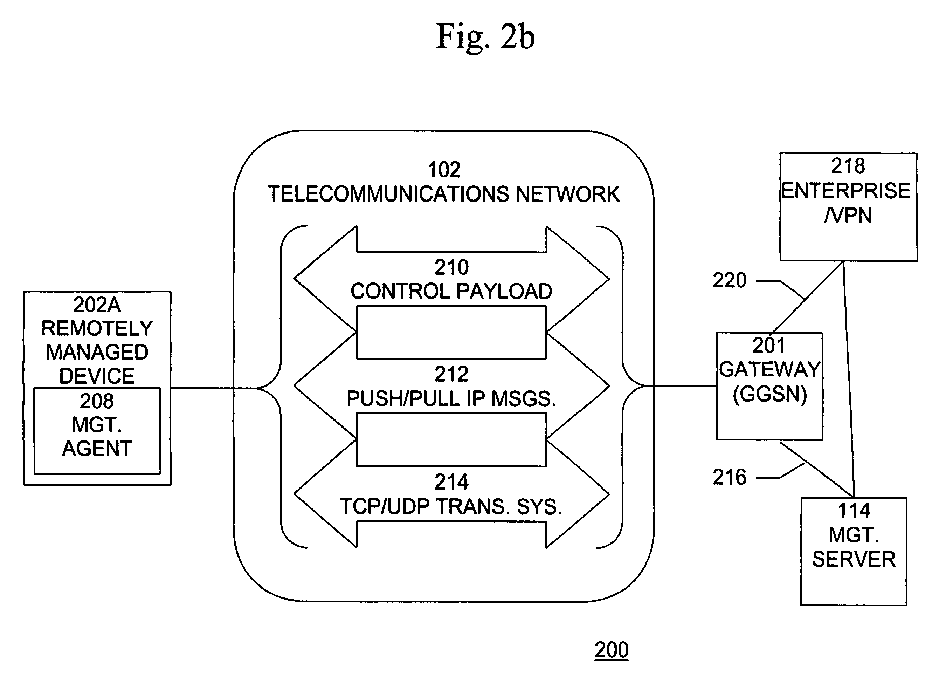

The use of GPRS in implementing the present invention is shown in Fig. 2b. As shown, a management server 114 communicates a control payload 210 with a remotely managed device, such as remotely managed device 202A. Control payload 210 includes information that is used to control aspects of the operation of remotely managed device 202A, such as commands to the device, status information from the device, etc. Control payload 210 is carried in one or more SMS messages to remotely managed device 202A. Management server 114 generates messages that include the information to be included in control payload 210 and transmits these messages to gateway 201, which is typically a Gateway GPRS Service Node (GGSN). The GGSN acts as a gateway between the GPRS network and Public Data Networks such as IP and X.25. GGSNs also connect to other GPRS networks to facilitate GPRS roaming. Messages received from management server 114 are transmitted and/or received as push/pull IP messages 212. The messages are transported using the GPRS network, which may be a Transmission Control Protocol/Internet Protocol (TCP/IP) transport service 214 or a User Datagram Protocol/Internet Protocol (UDP/IP) transport service 214. UDP is a connectionless protocol that, like TCP, runs on top of IP networks. Unlike TCP/IP, UDP/IP provides very few error recovery services, offering instead a direct way to send and receive datagrams over an IP network.

The connection between management server 114 and GGSN 201 is typically an APN 216. In addition to management server 114, other networks, such as enterprise networks and/or virtual private networks (VPN) 218 may communicate with GGSN 201. The connection between the enterprise/VPN networks and GGSN 201 is typically a shared or common APN 220. APN 216 is distinct from APN 220, that is, APN 216 is not a shared or common APN.

Control payload 210 may also include information from remotely managed device 202A, which is carried in one or more IP messages from remotely managed device 202A to management server 114. Remotely managed device 202A generates messages that include the information to be included in control payload 210, formats the messages into IP messages that may be sent using the TCP/IP or UDP/IP transport services 214, and transmits the messages using service 214. The IP messages are transported using the signaling network, such as SS7 signaling network 214 and delivered, via the GGSN gateway 201, to management server 114, which extracts control payload 210 from the message.

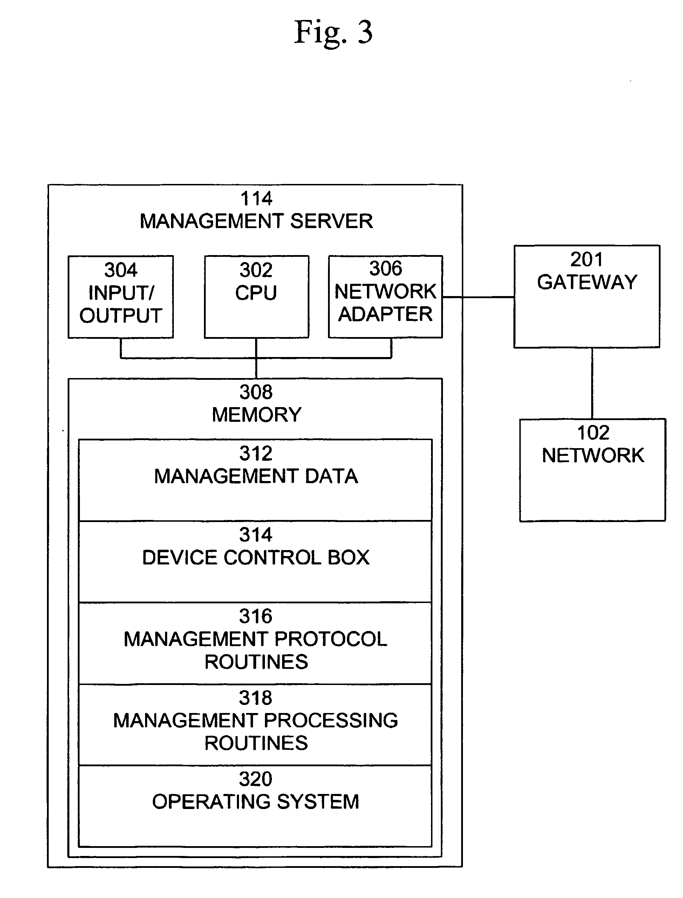

An exemplary block diagram of management server 114 is shown in Fig. 3. Management server 114 is typically a programmed general-purpose computer system, such as a personal computer, workstation, server system, and minicomputer or mainframe computer. Management server 114 includes processor (CPU) 302, input/output circuitry 304, network adapter 306, and memory 308. CPU 302 executes program instructions in order to carry out the functions of the present invention. Typically, CPU 302 is a microprocessor, such as an INTEL PENTIUM® processor, but may also be a minicomputer or mainframe computer processor. Fig. 3 illustrates an embodiment in which management server 114 is implemented as a single processor computer system. However, the present invention contemplates embodiments in which management server 114 is implemented as a multi-processor system, in which multiple processors 302A-402N share system resources, such as memory 308, input/output circuitry 304, and network adapter 306. The present invention also contemplates embodiments in which management server 114 is implemented as a plurality of networked computer systems, which may be single-processor computer systems, multi-processor computer systems, or a mix thereof.

Input/output circuitry 304 provides the capability to input data to, or output data from, computer system 300. For example, input/output circuitry may include input devices, such as keyboards, mice, touchpads, trackballs, scanners, etc., output devices, such as video adapters, monitors, printers, etc., and input/output devices, such as, modems, etc. Network adapter 306 interfaces management server 114 with gateway 201, which communicatively connects management server 114 with signaling channel 206 of telecommunications network 102, shown in Fig 1.

Memory 308 stores program instructions that are executed by, and data that are used and processed by, CPU 302 to perform the functions of the present invention. Memory 308 may include electronic memory devices, such as random-access memory (RAM), read-only memory (ROM), programmable read-only memory (PROM), electrically erasable programmable read-only memory (EEPROM), flash memory, etc., and electro-mechanical memory, such as magnetic disk drives, tape drives, optical disk drives, etc., which may use an integrated drive electronics (IDE) interface, or a variation or enhancement thereof, such as enhanced IDE (EIDE) or ultra direct memory access (UDMA), or a small computer system interface (SCSI) based interface, or a variation or enhancement thereof, such as fast-SCSI, wide-SCSI, fast and wide-SCSI, etc, or a fiber channel-arbitrated loop (FC-AL) interface.

Memory 308 includes management data 312, mailbox 314, management protocol routines 316, management processing routines 318, and operating system 320. Management data 312 includes data relating to each remotely managed device being managed by management server 114. Management data 312 includes data such as the current state and identity of each remotely managed device. This data is obtained from the management agent running on each remotely managed device. Mailbox 314 stores commands that are to be delivered to remotely managed devices so that the devices can retrieve the commands. Management protocol routines 316 include software that implements the protocols that communicate the remote management commands to devices over telecommunications network 102. Management processing routines 318 include software that receives or determines the remote management commands that are to be communicated to the remotely managed devices by management protocol routines 314. Operating system 320 provides overall system functionality.

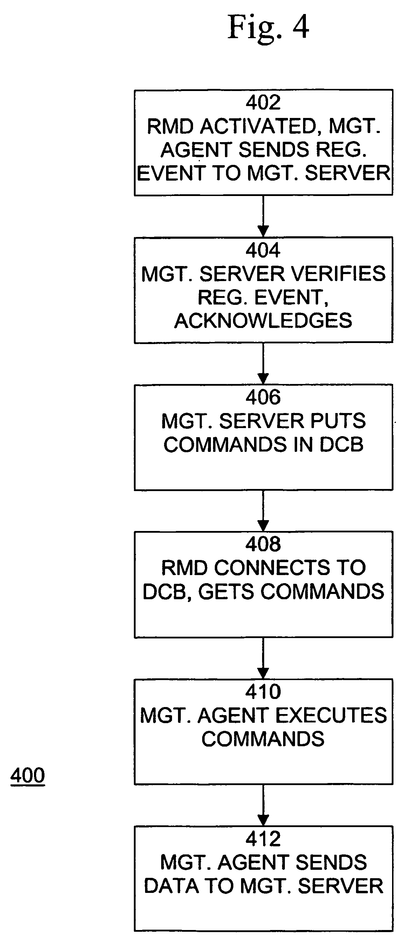

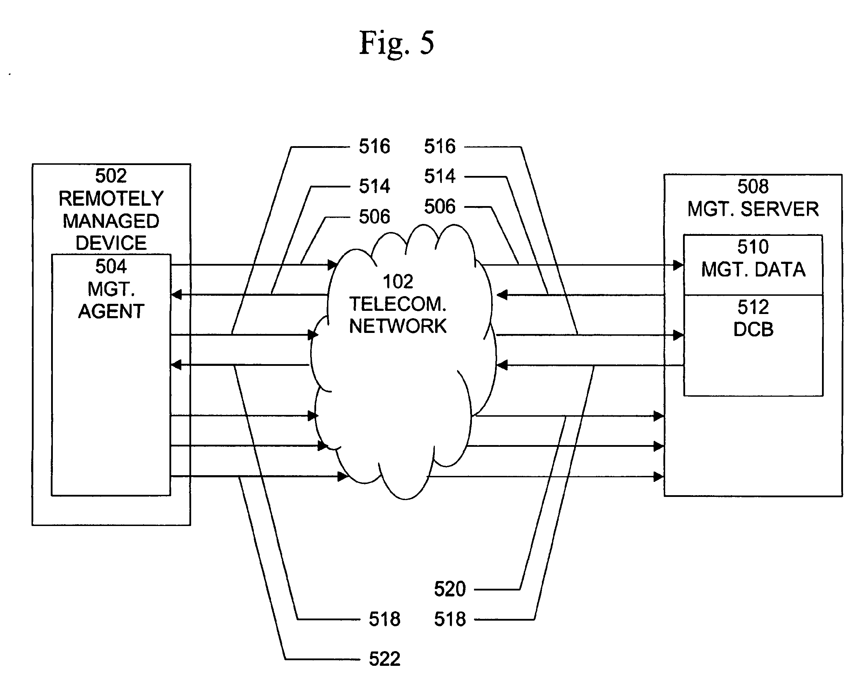

A process 400 for remotely managing devices over a GPRS channel, according to the present invention, is shown in Fig. 4. It is best viewed in conjunction with Fig. 5, which is a data flow diagram of the operation of process 400. Process 400 begins with step 402, in which a remotely managed device, such as remotely managed device 502, is activated. Device 502 runs management agent 504, which transmits registration event message 506 to management server 508. Registration event message 506 includes information identifying device 502 and information relating to the state of the device. Registration event message 506, and all communications between device 502 and management server 508, is transmitted using a security protocol that ensures that only authorized remotely managed devices, running authorized management agents, can communicate with management server 506. Preferably, the security mechanism used is based on public key encryption, but any other security mechanism that provides adequate security may also be used.

In step 404, the management server verifies the registration event by checking the validity of the information contained in registration event message 506. In particular, management server 508 verifies the identity of remotely managed device 502. Upon verification of device 502, management server 508 registers device 502 by storing registration information relating to device 502 in management data 510. The registration information includes the identity and state of device 502. Management server 508 establishes a mailbox 512 for the newly registered remotely managed device 502. Management server 506 also transmits a message 514 acknowledging successful registration of remotely managed device 502 to the device.

In step 406, management server 508 places commands intended for remotely managed device 502 in DCB 512. Such commands may include, for example:
- enabling/disabling access of the remotely managed device to the server (Lock/Unlock the device)
- enabling/disabling applications that may run on the remotely managed device
- erasing all or part of the device contents, such as programs and data
- transmitting new programs and data to a device
- querying the current state of the device
- monitoring the level of the battery in the device
- monitoring the location of the device in the wireless network, including foreign networks
- verifying that the command signature is in agreement with the signature of the device
- Reconfiguring applications that may run on the remotely managed device

In steps 408 and 410, the commands stored in DCB 512 are delivered to the remotely managed device. In particular, in step 408, a connection 516 is established between management agent 504, running on remotely managed device 502, and management server 508. Upon connection 516 being established, the commands that were stored in DCB 512 in step 406 are transmitted 518 to device 502. This protocol is applicable to both push and pull devices. A pull devices is a device that must request data before the data is transmitted to the device. A push device is a device to which data is transmitted without the device requesting the data, but which will nevertheless accept the data. In an embodiment in which remotely managed device 502 is a pull device, the management agent running on device 502 will occasionally connect to management server 508 and request the commands in DCB 512. In an embodiment in which remotely managed device 502 is a push device, management server 508 will occasionally connect to remotely managed device 502 and transmit the commands in DCB 512 to management agent 504. In both embodiments, the connections may be made periodically, based on some defined time interval, or they may be made based on predefined threshold conditions.

In step 410, management agent 504 executes the retrieved commands and transmits a notification message 520 that informs management server 508 of the results of executing each command. In addition, if one or more of the commands were to monitor parameters of remotely managed device 502, then, in step 412, management agent 504 will transmit the monitored information 522 to management server 508. The transmission may be periodic, based on some defined time interval, or they may be based on the values of certain parameters of device 502 in relation to predefined threshold conditions. The time intervals or threshold conditions may be inherent in device 502, or they may be transmitted as parameters or data related to the commands that were retrieved by device 502.

It is important to note that while the present invention has been described in the context of a fully functioning data processing system, those of ordinary skill in the art will appreciate that the processes of the present invention are capable of being distributed in the form of a computer readable medium of instructions and a variety of forms and that the present invention applies equally regardless of the particular type of signal bearing media actually used to carry out the distribution. Examples of computer readable media include recordable-type media such as floppy disc, a hard disk drive, RAM, and CD-ROM's, as well as transmission-type media, such as digital and analog communications links.

Although specific embodiments of the present invention have been described, it will be understood by those of skill in the art that there are other embodiments that are equivalent to the described embodiments. Accordingly, it is to be understood that the invention is not to be limited by the specific illustrated embodiments, but only by the scope of the appended claims.

## Claims

1. An apparatus for remotely managing a wireless device (202A, 202Z) over a wireless network (200), the apparatus comprising a processor (302) operable to execute computer program instructions and a memory (308) operable to store computer program instructions executable by the processor (302), the apparatus is operable to:
establish a communicative connection between a server (108A, 108N) and the wireless device (202A, 202Z) over a packet radio channel (204) of a telecommunications network (102), the packet radio channel (204) comprising a General Packet Radio Service channel;
transmit a command from the server (108A, 108N) to the wireless device (202A, 202Z) over the packet radio channel (204),
**characterised in that** the apparatus is operable to:
transmit a command from the server (108A, 108N) to a management agent process (208) executing on the wireless device (202A, 202Z) over the packet radio channel (204);
transmit information relating to execution of the command at the wireless device (202A, 202Z) from the wireless device (202A, 202Z) to the server (108A, 108N); and
execute the command at the wireless device (202A, 202Z) after verifying that a signature of the command and a signature of the device are in agreement, and the command comprises at least one of:
enabling/disabling access of the wireless device (202A, 202Z) to the server (108A, 108N);
enabling/disabling applications that may run on the wireless device (202A, 202Z); and
erasing all or part of contents of the wireless device (202A, 202Z).

2. The apparatus of claim 1, **characterised in that** the command transmitted from the server (108A, 108N) to the management agent process (208) comprises at least one of:
transmitting new commands and parameters to the wireless device (202A, 202Z);
querying a current state of the wireless device (202A, 202Z);
monitoring a level of a battery in the wireless device (202A, 202Z);
monitoring a location of the wireless device (202A, 202Z) in the wireless network (200); and
reconfiguring applications that may run on the wireless device (202A, 202Z).

3. The apparatus of claim 1 or 2, **characterised in that** the apparatus is operable to transmit the command to a management agent process (208) executing on the wireless device (202A, 202Z).

4. The apparatus of claim 3, **characterised in that** the apparatus is operable to transmit the command to a management agent process (208) executing on the wireless device (202A, 202Z) in a Short Message Service message.

5. The apparatus of claim 1, **characterised in that** the communicative connection is established periodically.

6. The apparatus of claim 1, **characterised in that** the communicative connection is established based on a threshold condition.

7. The apparatus of claim 1, **characterised in that** the information relating to execution of the command is transmitted periodically.

8. The apparatus of claim 1, **characterised in that** the information relating to execution of the command is transmitted based on a threshold condition of the wireless device (202A, 202Z).

9. The apparatus of claim 1, **characterised in that** the apparatus is operable to:
receive registration information from the wireless device (202A, 202Z);
verify the received registration information;
place a command for the wireless device (202A, 202Z) in a Device Control Box DCB (314); and
deliver the command to the wireless device (202A, 202Z).

10. The apparatus of claim 9, **characterised in that** the apparatus is operable to:
establish a connection with the wireless device (202A, 202Z);
receive a request for contents of the DCB from the wireless device (202A, 202Z); and
transmit the contents of the DCB to the wireless device (202A, 202Z).

11. The apparatus of claim 10, **characterised in that** the connection is established periodically.

12. The apparatus of claim 10, **characterised in that** the connection is established based on a threshold condition.

13. The apparatus of claim 9, **characterised in that** the apparatus is operable to:
establish a connection with the wireless device (202A, 202Z); and
transmit the contents of the DCB to the wireless device (202A, 202Z) without a request from the wireless device (202A, 202Z).

14. The apparatus of claim 13, **characterised in that** the connection is established periodically.

15. The apparatus of claim 13, **characterised in that** the connection is established based on a threshold condition.

16. The apparatus of claim 8, **characterised in that** the command comprises at least one of:
enabling/disabling access of the wireless device (202A, 202Z) to the server (108A, 108N);
enabling/disabling applications that may run on the wireless device (202A, 202Z);
erasing all or part of contents of the wireless device (202A, 202Z);
transmit new programs and data to the wireless device (202A, 202Z);
querying a current state of the wireless device (202A, 202Z);
monitoring a level of a battery in the wireless device (202A, 202Z);
monitoring a location of the wireless device (202A, 202Z) in the wireless network (200); and
reconfiguring applications that may run on the wireless device (202A, 202Z).

17. The apparatus of claim 8, **characterised in that** the apparatus is operable to receive information relating to execution of the command at the wireless device (202A, 202Z) from the wireless device (202A, 202Z).

## Patentansprüche

1. Apparat zur Fernsteuerung eines drahtlosen Geräts (202A, 202Z) über ein drahtloses Netzwerk (200), wobei der Apparat einen Prozessor (302) zur Ausführung von Computerprogrammanweisungen und einen Speicher (308) zur Speicherung von Computerprogrammanweisungen, welche durch den Prozessor (302) ausführbar sind, aufweist, wobei das Gerät zu Folgendem betriebsfähig ist:
Herstellung einer kommunikativen Verbindung zwischen einem Server (108A, 108N) und dem drahtlosen Gerät (202A, 202Z) über einen Packet Radio Channel (204) eines Telekommunikationsnetzwerks (102), wobei der Packet Radio Channel (204) einen General Packet Radio Channel aufweist;
Übermittlung eines Befehls von dem Server (108A, 108N) an das drahtlose Gerät (202A, 202Z) über den Packet Radio Channel (204),
**dadurch gekennzeichnet, dass** das Gerät zu Folgendem betriebsfähig ist:
Übermittlung eines Befehls von dem Server (108A, 108N) an einen Management Agent Process (208), welcher an dem drahtlosen Gerät (202A, 202Z) ausführbar ist, über den Packet Radio Channel (204);
Übermittlung von Informationen, welche die Ausführung des Befehls an dem drahtlosen Gerät (202A, 202Z) betreffen, von dem drahtlosen Gerät (202A, 202Z) an den Server (108A, 108N); und
Ausführung des Befehls an dem drahtlosen Gerät (202A, 202Z) nach Überprüfung, dass eine Signatur des Befehls und eine Signatur des Gerätes in Übereinstimmung sind, und der Befehl zumindest einen der folgenden Vorgänge aufweist:
Herstellung/Unterbindung eines Zugangs des drahtlosen Geräts (202A, 202Z) zu dem Server (108A, 108N);
Aktivierung/Deaktivierung von Anwendungen, die unter Umständen auf dem drahtlosen Gerät (202A, 202Z) laufen können; und
Löschung von Inhalt des drahtlosen Geräts (202A, 202Z) ganz oder teilweise.

2. Apparat nach Anspruch 1, **dadurch gekennzeichnet, dass** der von dem Server (108A, 108N) an den Management Agent Process (208) übermittelte Befehl zumindest einen der folgenden Vorgänge aufweist:
Übermittlung neuer Befehle und Parameter an das drahtlose Gerät (202A, 202Z);
Abfrage eines gegenwärtigen Zustands des drahtlosen Geräts (202A, 202Z);
Überwachung eines Füllstands einer Batterie in dem drahtlosen Gerät (202A, 202Z);
Überwachung eines Standorts des drahtlosen Geräts (202A, 202Z) in dem drahtlosen Netzwerk (200); und
Neukonfiguration von Anwendungen, die unter Umständen auf dem drahtlosen Gerät (202A, 202Z) laufen können.

3. Apparat nach Anspruch 1 oder 2, **dadurch gekennzeichnet, dass** der Apparat zur Übermittlung des Befehls an einen Management Agent Process (208), welcher an dem drahtlosen Gerät (202A, 202Z) ausführbar ist, betriebsfähig ist.

4. Apparat nach Anspruch 3, **dadurch gekennzeichnet, dass** der Apparat zur Übermittlung des Befehls an einen Management Agent Process (208), welcher an dem drahtlosen Gerät (202A, 202Z) ausführbar ist, in einem Short Message Service betriebsfähig ist.

5. Apparat nach Anspruch 1, **dadurch gekennzeichnet, dass** die kommunikative Verbindung periodisch herstellbar ist.

6. Apparat nach Anspruch 1, **dadurch gekennzeichnet, dass** die kommunikative Verbindung auf der Basis eines Grenzzustands herstellbar ist.

7. Apparat nach Anspruch 1, **dadurch gekennzeichnet, dass** die Informationen, welche die Ausführung des Befehls betreffen, periodisch übermittelbar sind.

8. Apparat nach Anspruch 1, **dadurch gekennzeichnet, dass** die Informationen, welche die Ausführung des Befehls betreffen, auf der Basis eines Grenzzustands des drahtlosen Geräts (202A, 202Z) übermittelbar sind.

9. Apparat nach Anspruch 1, **dadurch gekennzeichnet, dass** der Apparat zu Folgendem betriebsfähig ist:
Empfang von Anmeldedaten des drahtlosen Geräts (202A, 202Z);
Überprüfung der empfangenen Anmeldedaten;
Platzierung eines Befehls für das drahtlose Gerät (202A, 202Z) in einer Device Control Box DCB (314); und
Lieferung des Befehls an das drahtlose Gerät (202A, 202Z).

10. Apparat nach Anspruch 9, **dadurch gekennzeichnet, dass** der Apparat zu Folgendem betriebsfähig ist:
Herstellung einer Verbindung mit dem drahtlosen Gerät (202A, 202Z);
Empfang einer Anfrage nach Inhalt des DCB von dem drahtlosen Gerät (202A, 202Z); und
Übermittlung des Inhalts des DCB an das drahtlose Gerät (202A, 202Z).

11. Apparat nach Anspruch 10, **dadurch gekennzeichnet, dass** die kommunikative Verbindung periodisch herstellbar ist.

12. Apparat nach Anspruch 10, **dadurch gekennzeichnet, dass** die kommunikative Verbindung auf der Basis eines Grenzzustands herstellbar ist.

13. Apparat nach Anspruch 9, **dadurch gekennzeichnet, dass** der Apparat zu Folgendem betriebsfähig ist:
Herstellung einer Verbindung mit dem drahtlosen Gerät (202A, 202Z); und
Übermittlung des Inhalts des DCB an das drahtlose Gerät (202A, 202Z) ohne eine Anfrage von dem drahtlosen Gerät (202A, 202Z).

14. Apparat nach Anspruch 13, **dadurch gekennzeichnet, dass** die kommunikative Verbindung periodisch herstellbar ist.

15. Apparat nach Anspruch 13, **dadurch gekennzeichnet, dass** die kommunikative Verbindung auf der Basis eines Grenzzustands herstellbar ist.

16. Apparat nach Anspruch 8, **dadurch gekennzeichnet, dass** der Befehl zumindest einen der folgenden Vorgänge aufweist:
Herstellung/Unterbindung eines Zugangs des drahtlosen Geräts (202A, 202Z) zu dem Server (108A, 108N);
Aktivierung/Deaktivierung von Anwendungen, die unter Umständen auf dem drahtlosen Gerät (202A, 202Z) laufen können;
Löschung von Inhalt des drahtlosen Geräts (202A, 202Z) ganz oder teilweise;
Übermittlung neuer Programme und Daten an das drahtlose Gerät (202A, 202Z);
Abfrage eines gegenwärtigen Zustands des drahtlosen Geräts (202A, 202Z);
Überwachung eines Füllstands einer Batterie in dem drahtlosen Gerät (202A, 202Z);
Überwachung eines Standorts des drahtlosen Geräts (202A, 202Z) in dem drahtlosen Netzwerk (200); und
Neukonfiguration von Anwendungen, die unter Umständen auf dem drahtlosen Gerät (202A, 202Z) laufen können.

17. Apparat nach Anspruch 8, **dadurch gekennzeichnet, dass** der Apparat zum Empfang von Informationen, welche eine Ausführung des Befehls an dem drahtlosen Gerät (202A, 202Z) betreffen, von dem drahtlosen Gerät (202A, 202Z) betriebsfähig ist.

## Revendications

1. Appareil permettant de gérer à distance un périphérique sans fil (202A, 202Z) par l'intermédiaire d'un réseau sans fil (200), cet appareil comprenant un processeur (302) pouvant être utilisé pour l'exécution d'instructions de programmes informatiques et une mémoire (308) pouvant être utilisée pour l'enregistrement d'instructions de programmes informatiques exécutables par le processeur (302), cet appareil pouvant être utilisé pour :
établir une connexion de communication entre un serveur (108A, 108N) et le périphérique sans fil (202A, 202Z) par l'intermédiaire d'un canal radio à commutation par paquets (204) d'un réseau de télécommunications (102), ce canal radio à commutation par paquets (204) comprenant un Canal Général de Service Radio à Commutation par Paquets ;
transmettre une commande provenant du serveur (108A, 108N) au périphérique sans fil (202A, 202Z) par l'intermédiaire du canal radio à commutation par paquets (204) ;
**caractérisé en ce que** l'appareil peut être utilisé pour :
transmettre une commande du serveur (108A, 108N) à un process de l'agent de gestion (208) s'exécutant sur le périphérique sans fil (202A, 202Z) par l'intermédiaire du canal radio à commutation par paquets (204) ;
transmettre des informations concernant l'exécution de la commande au niveau du périphérique sans fil (202A, 202Z) du périphérique sans fil (202A, 202Z) au serveur (1 08A, 108N) ; et
exécuter la commande au niveau du périphérique sans fil (202A, 202Z) après avoir vérifié qu'une signature de la commande et qu'une signature du périphérique sont identiques et que la commande comprend au moins une de ces actions :
l'activation / désactivation de l'accès du périphérique sans fil (202A, 202Z) au serveur (108A, 108N) ;
l'activation / désactivation d'applications qui peuvent être exécutées sur le périphérique sans fil (202A, 202Z) ; et
l'effacement de tout le contenu ou d'une partie du contenu du périphérique sans fil (202A, 202Z).

2. Appareil de la revendication 1, **caractérisé en ce que** la commande transmise du serveur (108A, 108N) au process de l'agent de gestion (208) comprend au moins une de ces actions :
la transmission de nouvelles commandes et de nouveaux paramètres au périphérique sans fil (202A, 202Z) ;
la requête de l'état actuel du périphérique sans fil (202A, 202Z) ;
la surveillance d'un niveau de batterie du périphérique sans fil (202A, 202Z) ;
la surveillance d'une localisation du périphérique sans fil (202A, 202Z) dans le réseau sans fil (200) ; et
la reconfiguration d'applications pouvant être exécutées sur le périphérique sans fil (202A, 202Z).

3. Appareil de la revendication 1 ou 2, **caractérisé en ce que** l'appareil peut être utilisé pour transmettre la commande à un process de l'agent de gestion (208) s'exécutant sur le périphérique sans fil (202A, 202Z).

4. Appareil de la revendication 3, **caractérisé en ce que** l'appareil peut être utilisé pour transmettre la commande à un process de l'agent de gestion (208) s'exécutant sur le périphérique sans fil (202A, 202Z) dans un message de type Short Message Service.

5. Appareil de la revendication 1, **caractérisé en ce que** la connexion de communication est établie périodiquement

6. Appareil de la revendication 1, **caractérisé en ce que** la connexion de communication est établie sur la base d'une condition de seuil.

7. Appareil de la revendication 1, **caractérisé en ce que** l'information concernant l'exécution de la commande est transmise périodiquement

8. Appareil de la revendication 1, **caractérisé en ce que** l'information concernant l'exécution de la commande est transmise sur la base d'une condition de seuil du périphérique sans fil (202A, 202Z).

9. Appareil de la revendication 1, **caractérisé en ce que** l'appareil peut être utilisé pour :
recevoir des informations d'enregistrement provenant du périphérique sans fil (202A, 202Z) ;
vérifier les informations d'enregistrement reçues ;
placer une commande pour le périphérique sans fil (202A, 202Z) dans une Device Control Box DCB (314) ; et
transférer la commande au périphérique sans fil (202A, 202Z).

10. Appareil de la revendication 9, **caractérisé en ce que** l'appareil peut être utilisé pour :
établir une connexion avec le périphérique sans fil (202A, 202Z) ;
recevoir une requête pour le contenu de la DCB provenant du périphérique sans fil (202A, 202Z) ; et
transmettre le contenu de la DCB au périphérique sans fil (202A, 202Z).

11. Appareil de la revendication 10, **caractérisé en ce que** la connexion de communication est établie périodiquement

12. Appareil de la revendication 10, **caractérisé en ce que** la connexion de communication est établie sur la base d'une condition de seuil.

13. Appareil de la revendication 9, **caractérisé en ce que** l'appareil peut être utilisé pour :
établir une connexion avec le périphérique sans fil (202A, 202Z) ; et
transmettre le contenu de la DCB au périphérique sans fil (202A, 202Z) sans requête provenant du périphérique sans fil (202A, 202Z).

14. Appareil de la revendication 13, **caractérisé en ce que** la connexion de communication est établie périodiquement

15. Appareil de la revendication 13, **caractérisé en ce que** la connexion de communication est établie sur la base d'une condition de seuil.

16. Appareil de la revendication 8, **caractérisé en ce que** la commande comprend au moins une de ces actions :
l'activation / désactivation de l'accès du périphérique sans fil (202A, 202Z) au serveur (108A, 108N) ;
l'activation / désactivation d'applications qui peuvent être exécutées sur le périphérique sans fil (202A, 202Z) ;
l'effacement de tout le contenu ou d'une partie du contenu du périphérique sans fil (202A, 202Z) ;
la transmission de nouveaux programmes et de nouvelles données au périphérique sans fil (202A, 202Z) ;
la requête de l'état actuel du périphérique sans fil (202A, 202Z) ;
la surveillance d'un niveau de batterie du périphérique sans fil (202A, 202Z) ;
la surveillance d'une localisation du périphérique sans fil (202A, 202Z) dans le réseau sans fil (200) ; et
la reconfiguration d'applications pouvant être exécutées sur le périphérique sans fil (202A, 202Z).

17. Appareil de la revendication 8, **caractérisé en ce que** l'appareil peut être utilisé pour recevoir une information concernant l'exécution de la commande au niveau du périphérique sans fil (202A, 202Z) provenant du périphérique sans fil (202A, 202Z).
